# EUROPEAN PATENT APPLICATION

(11) **EP 4 583 500 A1**
(43) Date of publication of application: **09.07.2025**
(21) Application number: 23883065.7
(22) Date of filing: 24.10.2023
(51) Int. Cl.: H04M 1/72451, H04M 1/72403, G06F 3/0484, G06F 3/0481, G06F 3/041

(54) **ELECTRONIC DEVICE AND METHOD FOR DISPLAYING MULTIPLE WINDOW-BASED NOTIFICATION INFORMATION IN ELECTRONIC DEVICE**

(30) Priority: 26.10.2022 KR 20220139007; 31.10.2022 KR 20220142770
(71) Applicant: Samsung Electronics Co., Ltd., Suwon-si, Gyeonggi-do 16677 (KR)
(72) Inventor: LEE, Bona, Suwon-si Gyeonggi-do 16677 (KR); NAM, Myoungwoo, Suwon-si Gyeonggi-do 16677 (KR); MOON, Minjeong, Suwon-si Gyeonggi-do 16677 (KR); PARK, Chanpyo, Suwon-si Gyeonggi-do 16677 (KR); LEE, Seungyong, Suwon-si Gyeonggi-do 16677 (KR)
(74) Representative: Walaski, Jan Filip
(86) International application number: PCT/KR2023/016572
(87) International publication number: WO 2024/090959

(57) **Abstract**

Disclosed are an electronic device and a method for displaying multiple window-based notification information in same. The electronic device according to an embodiment may comprise a display, a communication module, a memory for storing instructions, and a processor operatively connected to the display, the communication module, and the memory. When executed by the processor, the instructions according to an embodiment may cause the electronic device to display, on the display, a plurality of windows displaying application execution screens. The at least one processor according to an embodiment may identify the occurrence of a notification in a state in which the plurality of windows are displayed. The at least one processor according to an embodiment may identify at least one designated state, associated with the selection of a window in which to display notification information among the plurality of windows, on the basis of identifying the occurrence of the notification. The at least one processor according to an embodiment may be configured to display the notification information in at least a portion of the window selected from among the plurality of windows on the basis of the at least one designated state.

## Description

### [Technical Field]

Various embodiments of the disclosure relate to a method for displaying notification information in an electronic device.

### [Background Art]

Various services and additional functions provided through an electronic device, for example, a mobile electronic device such as a smartphone have been gradually increased. Accordingly, communication service providers or electronic device manufacturers are competitively expanding various functions and pursuing differentiation from other businesses to improve the effective values of such electronic device and satisfy various desires of users. Therefore, various functions provided through electronic devices have been increasingly advanced.

Meanwhile, electronic device manufacturers are providing a multi-tasking function, which allows users to execute two or more tasks (e.g., execute two or more applications), and a multi-window function, which divides a display screen into two or more sections to simultaneously display the screens of two or more tasks (e.g., application execution screens), to provide user convenience.

For example, electronic device manufacturers may provide electronic devices having a bigger display screen through large, foldable, bendable, or rollable displays, facilitating the display of multiple windows on large display screens.

### [Detailed Description of the Invention]

### [Technical Problem]

An electronic device may identify notification occurrence in a state in which multiple windows are displayed. For example, a notification may occur through various applications of the electronic device. For example, notifications may include a call reception notification generated through a phone application, a message reception notification generated through a message application, an email reception notification generated through an email application, a schedule notification generated through a calendar application, or a game-related notification generated through a game application and may further include other notifications from other applications.

The electronic device may display notification information in a fixed display area of a display, regardless of a multi-window layout or an individual state of the multi-windows during multi-window display. Displaying notification information in the fixed display area of the display, regardless of the multi-window layout or the individual states of the multi-windows, may cause user inconvenience by disrupting the user's focus or extending the route to identify notifications.

An embodiment may provide an electronic device which may display notification information in an area where the user's line of sight is unobstructed and the route for identifying notifications is short, based on the state of a display associated with multiple windows when a notification occurs during multiple window display in the electronic device and a multiple window-based notification information display method in an electronic device.

### [Technical Solution]

The electronic device according to an embodiment may include a display, a communication module, memory storing instructions, and a processor operatively connected to the display, the communication module, and the memory. The instructions according to an embodiment may be configured to, when executed by the processor, cause the electronic device to display, on the display, multiple windows displaying application execution screen. The instructions according to an embodiment may be configured to, when executed by the processor, cause the electronic device to identify notification occurrence in a state in which the multiple windows are being displayed. The instructions according to an embodiment may be configured to, when executed by the processor, cause the electronic device to identify at least one designated state, associated with the selection of a window to display notification information among the multiple windows, based on the identification of the occurrence of the notification. The instructions according to an embodiment may be configured to, when executed by the processor, cause the electronic device to display the notification information in at least a portion of the window selected from among the multiple windows based on the at least one designated state.

A multiple window-based notification information display method in an electronic device according to an embodiment may include an operation of displaying multiple windows configured to display an application execution screen on a display of the electronic device. The method according to an embodiment may include an operation of identifying notification occurrence in a state in which the multiple windows are being displayed. The method according to an embodiment may include an operation of identifying at least one designated state, associated with the selection of a window to display notification information among the multiple windows, based on the identification of the occurrence of the notification. The method according to an embodiment may include an operation of displaying the notification information in at least a portion of the window selected from among the multiple windows, based on at least one designated state associated with the multiple windows.

A non-transitory computer-readable recording medium according to an embodiment may store instructions configured to, when executed, configured to cause an electronic device to display, on a display of the electronic device, multiple windows displaying application execution screen, identify notification occurrence in a state in which the multiple windows are being displayed, identify at least one designated state, associated with the selection of a window to display notification information among the multiple windows, based on the identification of the occurrence of the notification, and display the notification information in at least a portion of the window selected from among the multiple windows, based on the at least one designated state.

### [Advantageous Effects]

According to an embodiment, the electronic device may, when a notification occurs during multi-window displaying, display notification information in a designated area of a window selected based on at least one designated state associated with the selection of the window to display the notification information from among the multiple windows, thus providing convenience to the user by reducing gaze shift distance for identifying notifications without interrupting the user's line of sight.

### [Brief Description of Drawings]

FIG. 1 is a block view illustrating an electronic device in a network environment according to an embodiment.
FIG. 2A is a view illustrating a structure of an unfolded state of an electronic device according to an embodiment.
FIG. 2B is a view illustrating a structure of a folded state of an electronic device according to an embodiment.
FIG. 3 is a block view illustrating an electronic device according to an embodiment.
FIG. 4 is a flowchart illustrating a multiple window-based notification information display operation in an electronic device according to an embodiment.
FIG. 5 is a flowchart illustrating a notification information display operation based on multiple states associated with multiple windows in an electronic device according to an embodiment.
FIG. 6A is a view illustrating a first window and a second window according to an embodiment.
FIG. 6B is a view illustrating a first window to a third window according to an embodiment.
FIG. 7A is a view illustrating the case of a video or game playing state when a notification occurs while displaying a first window and a second window according to an embodiment.
FIG. 7B is a view illustrating the case of a video or game playing state when a notification occurs while displaying a first window to a third window according to an embodiment.
FIG. 8A is a view illustrating the case of an SIP window activation state when a notification occurs while displaying a first window and a second window according to an embodiment.
FIG. 8B is a view illustrating the case of an SIP window activation state when a notification occurs while displaying a first window to a third window according to an embodiment.
FIG. 9A is a view illustrating the case of a state in which a trajectory of a user's hand on a display is identifiable, when a notification occurs while displaying a first window and a second window according to an embodiment.
FIG. 9B is a view illustrating the case of a state in which a trajectory of a user's hand on a display is identifiable, when a notification occurs while displaying a first window to a third window according to an embodiment.
FIG. 10A is a view illustrating the case of a state in which an unused window exists for a designated time period or more, when a notification occurs while displaying a first window and a second window according to an embodiment.
FIG. 10B is a view illustrating the case of a state in which an unused window exists for a designated time period or more, when a notification occurs while displaying a first window to a third window according to an embodiment.
FIG. 11A is a view illustrating the case of a state in which button information is displayed on a window other than a focus window, when a notification occurs while displaying a first window and a second window according to an embodiment.
FIG. 11B is a view illustrating the case of a state in which a camera punch hole area exists on a window other than a focus window, when a notification occurs while displaying a first window to a third window according to an embodiment.

### [Mode for Carrying out the Invention]

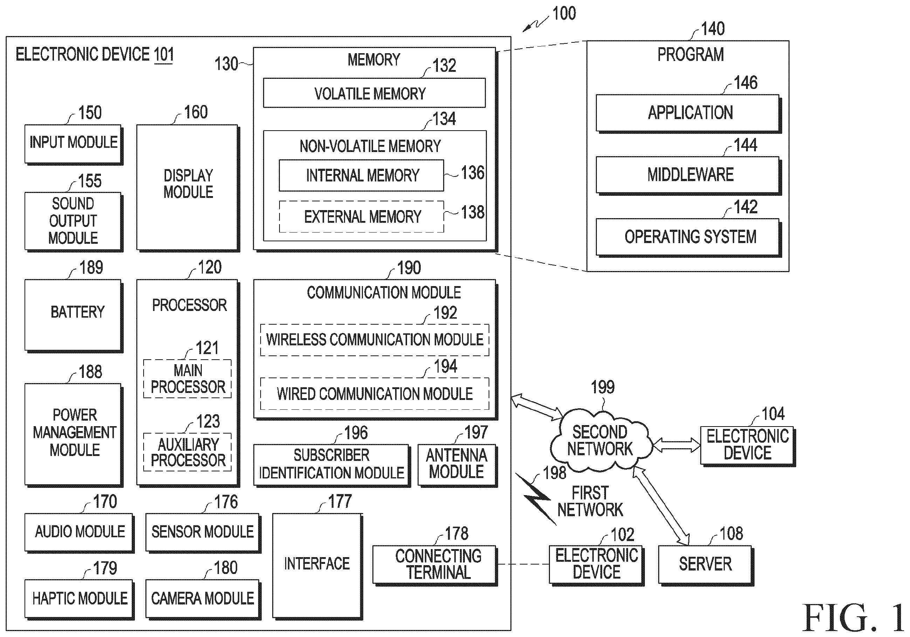

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. **In** another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

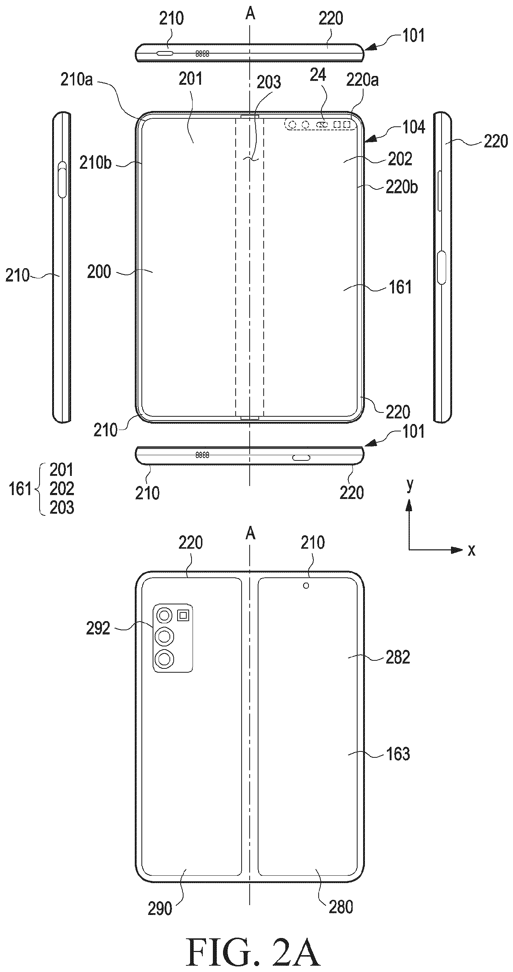

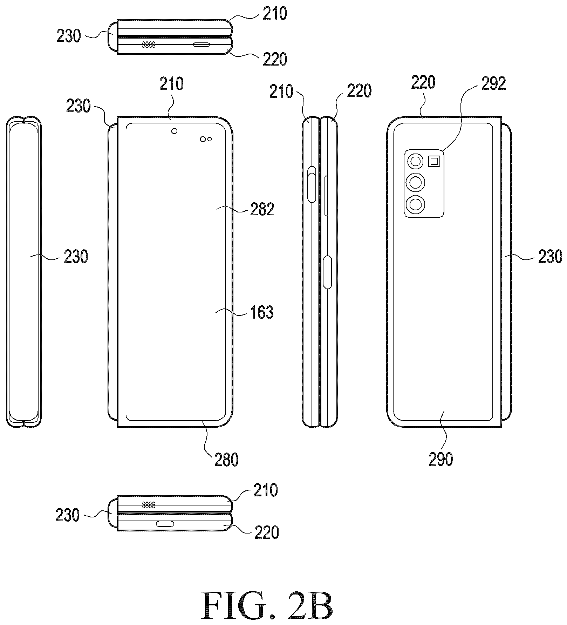

FIG. 2A is a view illustrating a structure of an unfolded state of an electronic device according to an embodiment and FIG. 2B is a view illustrating a structure of a folded state of an electronic device according to an embodiment.

Referring to FIGS. 2A and 2B, the electronic device 101 according to an embodiment may correspond to a foldable electronic device and include a hinge structure (e.g., the hinge structure 230 in FIG. 2B) (e.g., a hinge cover) configured to cover a foldable portion of a housing 200, and a first display 161 (e.g., the display module 160 in FIG. 1) having a flexible or foldable shape and disposed in a spaced defined by the housing 200. According to an embodiment, the electronic device 101 may include a second display 163 disposed in a portion of the housing 200 opposite a surface in which the first display 161 is disposed. According to an embodiment, the surface in which the first display 161 is disposed is defined as a first surface (e.g., a front surface) of the electronic device 101. An opposite surface to the first surface is defined as a second surface (e.g., a rear surface) of the electronic device 101. A surface surrounding a space between the first surface and the second surface is defined as a third surface (e.g., a lateral surface) of the electronic device 101. The second display 163 may have a smaller size than the first display 161.

According to an embodiment, the housing 200 may include a first housing structure 210, a second housing structure 220 including a sensor area 224, a first rear cover 280, a second rear cover 290, and a hinge structure 230. The housing 200 of the electronic device 101 is not limited to the shape and combination shown in FIGS. 2A and 2B, and may be implemented by another shape or a combination and/or coupling of components. For example, in another embodiment, the first housing structure 210 and the first rear cover 280 may be integrally formed and the second housing structure 220 and the second rear cover 290 may be integrally formed.

According to an embodiment, the first housing structure 210 and the second housing structure 220 are arranged at opposite sides around a folding axis (e.g., the folding axis A in FIG. 2A) and have generally symmetric shapes with respect to the folding axis A. As described below, an angle and distance between the first housing structure 210 and the second housing structure 220 may vary according to whether the electric device 101 is in an unfolded status, a folded status, or a partially unfolded intermediate status. According to an embodiment, the second housing structure 220, unlike the first housing structure 210, may additionally include a sensor area 224 in which various sensors are disposed, but may have a shape symmetrical to the first housing structure in other areas.

According to an embodiment, the first housing structure 210 and the second housing structure 220 may be connected to the hinge structure 230 and may be folded or unfolded according to rotation thereof around the hinge structure 230. Accordingly, the electronic device 101 may be changed to the folded status or the unfolded status. The electronic device 101 may be switched from the unfolded status, as shown in FIG. 2A, to the folded status (e.g., an in-folded status in FIG. 2B), in which a first surface of the first housing structure 210 and a first surface of the second housing structure 220 face each other as the surfaces come closer to each other. The electronic device 101 may be switched from the unfolded status, as shown in FIG. 2A, to the folded status (e.g., an out-folded status), in which a second surface of the first housing structure 210 and a second surface of the second housing structure 220 face each other as the surfaces come closer to each other.

According to an embodiment, as shown in FIG. 2A, the first housing structure 210 and the second housing structure 220 may together configure a recess configured to receive the first display 161. According to an embodiment, the recess may have two or more different widths in a direction perpendicular to the folding axis A due to the sensor area 224. According to an embodiment, the recess may have a first width w1 between a first portion 210a parallel to the folding axis A in the first housing structure 210 and a first portion 220a formed at the edge of the sensor area 224 in the second housing structure 220, and the recess may have a second width w2 defined by a second portion 210b of the first housing structure 210 and a second portion 220b which is parallel to the folding axis A while not corresponding to the sensor area 224 in the second housing structure 220. In this case, the second width w2 may be configured to be longer than the first width w1. For another example, the first portion 210a of the first housing structure 210 and the first portion 220a of the second housing structure 220 which have shapes asymmetric to each other may define the first width w1 of the recess, and the second portion 210b of the first housing structure 210 and the second portion 220b of the second housing structure 220 which have symmetric shapes to each other may define the second width w2 of the recess. According to an embodiment, the first portion 220a and the second portion 220b of the second housing structure 220 may have different distances from the folding axis A. The width of the recess is not limited to the embodiments described above. In another embodiment, the recess may have multiple widths due to the shape of the sensor area 224 or an asymmetric shaped portion of the first housing structure 210 and the second housing structure 220.

According to an embodiment, at least a portion of the first housing structure 210 and the second housing structure 220 may be configured by a metal or non-metal material having a selected degree of rigidity to support the first display 161. At least a portion made of the metal material may provide a ground plane for the electronic device 101 and may be electrically connected to a ground line configured on a printed circuit board.

According to an embodiment, the sensor area 224 may be disposed to have a predetermined area adjacent to one side corner of the second housing structure 220. However, the disposition, shape, and size of the sensor area 224 is not limited to the embodiment described above. For example, in another embodiment, the sensor area 224 may be provided in a different corner or in a predetermined area between the upper corner and the lower corner of the second housing structure 220. In an embodiment, components embedded in the electronic device 101 for performing various functions may be visually exposed to the front surface of the electronic device 101 through the sensor area 224 or at least one opening provided through the sensor area 224. In various embodiments, the components may include various sensors. The sensors may include, for example, at least one of a front camera, a receiver, or a proximity sensor.

According to an embodiment, the first rear cover 280 may be disposed on one side of the folding axis on the rear surface of the electronic device 101, and have, for example, a substantially rectangular periphery which may be surrounded by the first housing structure 210. Similarly, the second rear cover 290 may be disposed on the other side of the folding axis on the rear surface of the electronic device 101, and may have a periphery surrounded by the second housing structure 220.

According to an embodiment, the first rear cover 280 and the second rear cover 290 may have substantially symmetrical shapes to each other with respect to the folding axis A. However, the first rear cover 280 and the second rear cover 290 do not necessarily have symmetric shapes and in another embodiment, the electronic device 101 may include the first rear cover 280 and the second rear cover 290 having various shapes. In another embodiment, the first rear cover 280 and the first housing structure 210 may be integrally formed and the second rear cover 290 and the second housing structure 220 may be integrally formed.

According to an embodiment, the first rear cover 280, the second rear cover 290, the first housing structure 210, and the second housing structure 220 may define a space in which various components (e.g., a printed circuit board or battery) of the electronic device 101 may be disposed. According to an embodiment, one or more components may be arranged on or visually exposed through the rear surface of the electronic device 101. By way of example, at least a portion of a sub-display may be visually exposed through a first rear area 282 of the first rear cover 280. For another example, one or more components or sensors may be visually exposed through a second rear area 292 of the second rear cover 290. In an embodiment, the sensor may include a proximity sensor and/or a rear camera.

According to an embodiment, the front camera visually exposed to the front surface of the electronic device 101 through at least one opening disposed through the sensor area 224 and the rear camera visually exposed through the second rear surface area 292 of the second rear cover 290 may include one or more of lenses, image sensors, and/or image signal processors. The flash may include, for example, a light-emitting diode or a xenon lamp. In some embodiments, two or more lenses (an infrared camera, and wide-angle and telephoto lens) and image sensors may be arranged on one surface of the electronic device 101.

Referring to FIG. 2B, the hinge structure 230 may be disposed between the first housing structure 210 and the second housing structure 220 and configured to cover an internal component. According to an embodiment, the hinge structure 230 may be covered or exposed by a portion of the first housing structure 210 and the second housing structure 220 according to the folding status (the unfolded status, intermediate status, or folded status) of the electronic device 101. According to an embodiment, as shown in FIG. 2A, when the electronic device 101 is in the unfolded status, the hinge structure 230 may be covered by the first housing structure 210 and the second housing structure 220 not to be exposed. For another example, as shown in FIG. 2B, when the electronic device 101 is in the folded status (e.g., a fully folded status), the hinge structure 230 may be exposed to the outside between the first housing structure 210 and the second housing structure 220. For another example, when in the intermediate status in which the first housing structure 210 and the second housing structure 220 are folded with a certain angle, the hinge cover 230 may be partially exposed to the outside between the first housing structure 210 and the second housing structure 220. In this case, the exposed area may be smaller than that of the fully folded status. In an embodiment, the hinge structure 230 may include a curved surface.

According to an embodiment, the first display 161 may be disposed in a space defined on the first surface of the first housing structure 210 and the first surface of the second housing structure 220. According to an embodiment, the second display 163 may be disposed in a space defined on the second surface of the first housing structure 210 or the second surface of the second housing structure 220. For example, the first display 161 may be seated in a recess defined by the housing 200 and configure most of the front surface of the electronic device 101. According to an embodiment, the first display 161 may correspond to a display having at least a partial area transformable to a flat surface or a curved surface. According to an embodiment, the first display 161 may include a folding area 203, a first display area 201 disposed in the first housing structure 310 which corresponds to one side (e.g., a left side of the folding area 203 shown in FIG. 2A) with reference to the folding area 203, and a second display area 202 disposed in the second housing structure 220 which corresponds to the other side (e.g., a right side of the folding area 203 shown in FIG. 2A) with reference to the folding area 203.

However, the division of areas in the first display 161 shown in FIG. 2A is exemplary and the first display 161 may be divided into multiple areas (e.g., four or more or four) according to the structure or function thereof. For example, the area of the first display 161 may be divided by the folding axis A or the folding area 203 extending in parallel with the y-axis in the embodiment shown in FIG. 2A, and in another embodiment, the area of the first display 161 may be divided with reference to another folding area (e.g., a folding area in parallel with the x-axis) or another folding axis (e.g., a folding axis in parallel with the x-axis). According to an embodiment, the first display 161 and the second display 163 may be combined to or disposed adjacent to a touch sensing circuit, a pressure sensor configured to measure a strength (pressure) of a touch, and/or a digitizer configured to detect a magnetic field-type stylus pen.

According to an embodiment, the first display area 201 and the second display area 202 may have overall symmetrical shapes with respect to the folding area 203. However, the second display area 202, unlike the first display area 201, may include a cut notch area depending on the presence of the sensor area 224, and may have a symmetric shape to the first display area 201 in areas other than the notch area. In other words, the first display area 201 and the second display area 202 may include parts symmetrical to each other and parts asymmetrical to each other.

Hereinafter, the operation of the first housing structure 210 and the second housing structure 220 and each area of the first display 161 according to the status (e.g., the folded status, unfolded status, or intermediate status) of the electronic device 101 will be described.

According to an embodiment, in case that the electronic device 101 is in the unfolded status (e.g., the unfolded status in FIG. 2A), the first housing structure 210 and the second housing structure 220 may be arranged to have an angle of 180 degrees therebetween and face the same direction. The surface of the first display area 201 and the surface of the second display area 202 of the first display 161 may have an angle of 180 degrees therebetween and face the same direction (e.g., the front direction of electronic device). The folding area 203 may configure the same plane with the first display area 201 and the second display area 202.

According to an embodiment, in case that the electronic device 101 is in the folded status (e.g., the folded status in FIG. 2B), the first housing structure 210 and the second housing structure 220 may be arranged to face each other. The surface of the first display area 201 and the surface of the second display area 202 of the first display 161 may have a narrow angle (e.g., between 0 degrees and 10 degrees) therebetween and face to each other. At least a portion of the folding area 203 may be configured to have a curved surface having a certain curvature.

According to an embodiment, in case that the electronic device 101 is in the intermediate status, the first housing structure 210 and the second housing structure 220 may be arranged to have a certain angle therebetween. The surface of the first display area 201 and the surface of the second display area 202 of the first display 161 may configure an angle therebetween larger than that of the folded status and smaller than that of the unfolded status. At least a portion of the folding area 203 may be configured to be a curved surface having a certain curvature, and in this case, the curvature may be smaller than that of the folded status.

According to an embodiment, the electronic device 101 may include an in-folding type structure or an out-folding type structure. The in-folding type may refer to a state in which the first display 161 in a flexible form is not exposed to the outside in the fully folded status. For another example, the in-folding type may refer to a state in which the first display 161 is folded in the front direction. The out-folding type may refer to a state in which the first display 161 is visually exposed to the outside in the fully folded status. For another example, the out-folding type may refer to a state in which the first display 161 is folded in the rear direction. For example, the electronic device 101 may display multiple windows in the unfolded status (e.g., the unfolded state in FIG. 2A).

FIGS. 2A and 2B illustrate the example of the state in which the display area extends through the flexible display, that is, the display area is increased, but the electronic device may have a display area extending using a rollable display or may include a display area of sufficient size to support multi-window display without being flexible or rollable.

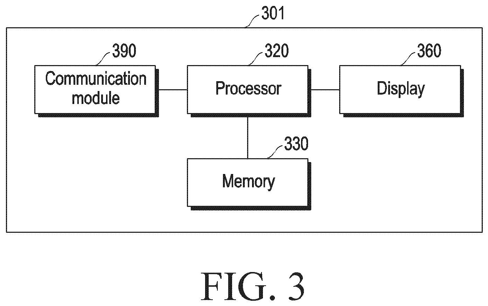

FIG. 3 is a block view illustrating an electronic device according to an embodiment.

Referring to FIG. 3, the electronic device 301 (e.g., the electronic device 101 in FIG. 1) according to an embodiment may include a processor 320, memory 330, a display 360, and a communication module 390. Without limitation thereto, the electronic device 301 according to an embodiment may be configured to additionally include various components or omit some of the components. The electronic device 301 according to an embodiment may further include the entirety or some of the electronic device 101 shown in FIG. 1.

The display 360 (e.g., the display 160 in FIG. 1 or the display 161 in FIGS. 2A and 2B) according to an embodiment may include a touch screen. When implemented with an input module in the form of a touch screen, the display 360 may display various information generated according to a touch operation of the user. According to an embodiment, the display 360 may be implemented to have a first state (e.g., an extension state) in which a screen is extended by the display 360 through a flexible or rollable operation or a second state (e.g., a reduced state) in which the screen is reduced by the display 360, or implemented to have a fixed screen size. According to an embodiment, the display 360 may be configured to display one or more windows, and in case of displaying multiple windows (e.g., two or more windows, three windows, or four or more windows), respective windows may be configured to have different sizes and arrangements or configured to overlap each other.

According to one embodiment, the communication module 390 (e.g., the communication module 190 in FIG. 1) may communicate with an external electronic device 104 under the control of at least one processor 320 via either a first network 198 (e.g., short-range communication networks such as Bluetooth, wireless fidelity (Wi-Fi) Direct, or infrared data association (IrDA)) or a second network 199 (e.g., long-range communication networks (e.g., legacy cellular networks, 5G networks, next-generation communication networks (e.g., a new radio (NR) access technology), the Internet, or computer networks (e.g., LAN or WAN)).

According to an embodiment, the processor 320 (e.g., the processor 120 in FIG. 1) may control overall operations of components included in the electronic device 301.

According to an embodiment, the processor 320 may provide a multi-window function configured to display two or more execution screens (e.g., application execution screens). According to an embodiment, the processor 320 may display, on the display 360, multiple windows each configured to display an application execution screen. For example, the processor 320 may display, on the display 360, two windows including a first window corresponding to a first application execution screen and a second window corresponding to a second application execution screen. Alternatively, the processor 320 may display, on the display 360, a first window corresponding to a first application execution screen, a second window corresponding to a second application execution screen, and a third window corresponding to a third application execution screen. For example, the processor 320 may display, on the display 360, four or more windows and the number of windows that may be displayed may not be limited. According to an embodiment, the processor 320 may control a layout including the size and arrangement position of each window when displaying multiple windows. For example, the processor 320 may change the layout including the size and arrangement position of each window according to the number of multiple windows or by selection (or designation or input) of the user.

The processor 320 according to an embodiment may identify the occurrence of a notification in a state in which the multiple windows are displayed. For example, the notification may occur through respective applications of the electronic device. For example, notifications may include a call reception notification generated through a phone application, a message reception notification generated through a message application, an email reception notification generated through an email application, a schedule notification generated through a calendar application, or a game-related notification generated through a game application and may further include other notifications from other applications (or functions).

The processor 320 according to an embodiment may identify at least one designated state, associated with the selection of a window to display notification information among the multiple windows, based on the identification of the occurrence of the notification while multiple windows are being displayed. For example, the at least one designated state may include at least one of a video or game playing state, a soft input channel (SIP) window activation state, a state in which a trajectory of the user's hand on the display is identifiable, a state in which a window unused for a designated time period or more exists, and/or a state in which a non-displayable area exists in a window other than a focus window. For example, the video or game playing state may include a state in which a video application execution screen is displayed on at least one window among the multiple windows or a game application execution screen is displayed on at least one window among the multiple windows. The SIP window activation state may include a state in which an SIP (e.g., a soft keyboard) execution screen is displayed on at least one window among the multiple windows. The state in which a trajectory of the user's hand on the display 360 is identifiable may correspond to a state in which a trajectory of the user's hand coming in contact with a display screen or performing hovering is identifiable. The state in which a window unused for a designated time period or more exists may correspond to a state in which at least one window among the multiple windows is not used for a designated time period or more. The state in which a non-displayable area exists in a window other than a focus window may include a state in which button (or icon) information is displayed on a window other than the focus window among the multiple windows or a camera punch hole exists. For example, the focus window may correspond to a window on which a most recent input (or touch input) is identified. For another example, the focus window may correspond to a foreground window or a window for displaying a screen of an application that the processor is intensively processing.

According to an embodiment, the processor 320 may display notification information in at least a portion of a window selected based on at least one designated state associated with the selection of a window to display notification information among the multiple windows. The processor 320 according to an embodiment may display the notification information as a pop-up window on at least a portion of the selected window area. According to an embodiment, the processor 320 may cause the pop-up window corresponding to the notification information to have a horizontal width not exceeding that of the selected window and display up to five lines when a content length (e.g., a sentence length) included in the notification information is long, with the remaining portion being represented by an ellipsis ("...").

According to an embodiment, in case that a notification occurs while displaying multiple windows, the processor 320 may identify whether it is in the video or game playing state and if not in the video or game playing state, identify whether it is in the SIP window activation state. According to an embodiment, in case that a notification occurs while displaying multiple windows, the processor 320 may identify the state in which a trajectory of the user's hand on the display is identifiable if it is not in the video or game playing state or the SIP window activation state. According to an embodiment, in case that a notification occurs while displaying multiple windows, the processor 320 may identify the state in which a window unused for a designated time period or more exists if it is not in the video or game playing state, the SIP window activation state, or the state in which a trajectory of the user's hand on the display is identifiable. According to an embodiment, in case that a notification occurs while displaying multiple windows, the processor 320 may identify the state in which a non-displayable area exists in a window other than a focus window if it is not in the video or game playing state, the SIP window activation state, the state in which a trajectory of the user's hand on the display is identifiable, or the state in which a window unused for a designated time period or more exists.

According to an embodiment, in case that it is in the video or game playing state when the notification occurs while displaying multiple windows, the processor 320 may select (or identify) a window other than a window on which a video application execution screen is displayed or a game application execution screen is displayed, and display the notification information in an area of the selected window. For example, in case that the video application execution screen or game application execution screen is being displayed on the first window when a notification occurs while displaying the first window and the second window, the processor 320 may display the notification information in at least a partial area of the second window. For example, in case that the video application execution screen or game application execution screen is displayed on the first window when a notification occurs while displaying the first window to the third window, the processor 320 may display the notification information in at least a partial area of a window that is not in focus among the second window and the third window.

According to an embodiment, in case that it is in the SIP window activation state when a notification occurs while displaying multiple windows, the processor 320 may select (or identify) a window adjacent to a window on which an SIP execution screen is displayed and display the notification information on the selected window area. For example, in case that the SIP execution screen is being displayed on the second window when a notification occurs while displaying the first window and the second window, the processor 320 may display the notification information in at least a partial area of the first window that is adjacent to the second window, and may display notification information in an area of the first window that is adjacent to the second window. For example, in case that the SIP execution screen is displayed on the third window when a notification occurs while displaying the first window to the third window, the processor 320 may display the notification information in at least a partial area of the second window which is not in the focus state among the first window and the second window, and may display notification information in an area of the second window that is adjacent to the third window.

According to an embodiment, in case that it is in the state in which a trajectory of the user's hand on the display is identifiable when a notification occurs while displaying multiple windows, the processor 320 may select a window that overlaps the most with an area corresponding to the trajectory of the user's hand and display the notification information in at least a partial area of the selected window. For example, in case that it is in the state in which a trajectory of the user's hand on the display is identifiable when the a notification occurs while displaying the first window and the second window, the processor 320 may identify an area corresponding to the trajectory of the user's hand and in case that a window that overlaps the most with an area corresponding the trajectory of the user's hand is the second window, display the notification information in at least a partial area of the second window. For example, in case that it is in the state in which a trajectory of the user's hand on the display is identifiable when the a notification occurs while displaying the first window to the third window, the processor 320 may identify an area corresponding to the trajectory of the user's hand and in case that a window that overlaps the most with an area corresponding the trajectory of the user's hand is the third window, display the notification information in at least a partial area of the third window.

According to an embodiment, in case that it is in the state in which a window unused for a designated time period or more exists when a notification occurs while displaying multiple windows, the processor 320 may select the window not used for a designated time period or more and display the notification information in at least a partial area of the selected window. In case that there are multiple windows unused for a designated time period or more, a window that has not been used for the longest time may be selected. For example, in case that the second window corresponds to a window not used for a designated time period or more or a window that has not been used for the longest time may be selected when a notification occurs while displaying the first window and the second window, the processor 320 may display the notification information in at least a partial area of the second window. For example, in case that the second window corresponds to a window not used for a designated time period or more or a window that has not been used for the longest time when a notification occurs while displaying the first window to the third window, the processor 320 may display the notification information in at least a partial area of the second window and may display the notification information in an area at a position adjacent to the focus window.

According to an embodiment, in case that it is in the state in which a non-displayable area exists in a window other than a focus window when a notification occurs while displaying multiple windows, the processor 320 may display the notification information at a position other than the non-displayable area within the window other than the focus window. According to an embodiment, in case that it is not in the state in which a non-displayable area exists in a window other than a focus window when a notification occurs while displaying multiple windows, the processor 320 may display the notification information at an upper area of the window other than the focus window. For example, in case that the first window corresponds to the focus window and it is in the state in which button (or icon) information is displayed on the second window other than the focus window or the state in which the camera punch hole exists when a notification occurs while displaying the first window and the second window, the processor 320 may display the notification information at a position other than the button information display area or the camera punch hole area. For example, in case that the first window corresponds to the focus window and it is not in the state in which button (or icon) information is displayed on the second window other than the focus window or the state in which the camera punch hole exists when a notification occurs while displaying the first window and the second window, the processor 320 may display the notification information in an upper end of the second window. For example, in case that the second window corresponds to the focus window and it is in the state in which the second window or the third window which do not correspond to the focus window is selected and the button (or icon) information is displayed on the second window or the third window or the state in which the camera punch hole exists when a notification occurs while displaying the first window to the third window, the processor 320 may display the notification information in an area of a position other than the button information display area or the camera punch hole area. For example, in case that the first window corresponds to the focus window, the second window or the third window which does not correspond to the focus window is selected, and it is not in the state in which button (or icon) information is displayed on the selected window or the state in which the camera punch hole exists when a notification occurs while displaying the first window to the third window, the processor 320 may display the notification information in an upper end of the selected window.

According to an embodiment, the memory 330 may store an application program and data. For example, the memory 330 may store an application (or function or program) associated with an operation of identifying at least one designated state associated with the selection of a window to display notification information among the multiple windows, selecting a window based on the identified designated state, and displaying the notification information in at least a partial area of the selected window. The memory 330 according to an embodiment may store various data generated during execution of a program 140 in addition to a program (e.g., the program 140 in FIG. 1) used for function operation. The memory 330 may largely include a program area 140 and a data area (not shown). The program area 140 may store program information associated with operating the electronic device 301, such as an operating system (OS) (e.g., the operating system 142 in FIG. 1) used to boot the electronic device 301. The data area (not shown) may store transmitted and/or received data and generated data according to various embodiments. In addition, the memory 330 may be configured to include at least one storage medium, such as flash memory, a hard disk, a multimedia card micro-type memory (e.g., secure digital (SD) or extreme digital (XD) memory), RAM, or ROM.

According to an embodiment, the electronic device 301 may further include various components without limitation to the configuration shown in FIG. 3. According to an embodiment, the electronic device 301 may further include an image processing module (not shown). The image processing module may perform a 2D or 3D image processing and/or rendering operation based on control of the processor 320. According to an embodiment, the electronic device 301 may further include a sound processing module (not shown). The sound processing module may perform a sound input or output operation based on control of the processor 320.

In the above-described embodiment, the main components of the electronic device were explained through the electronic device 301 in FIG. 3. However, the electronic device 301 may be implemented with more components than those shown in FIG. 3, or the electronic device 301 may be implemented with fewer components.

The electronic device according to an embodiment may include a display, a communication module, memory storing instructions, and a processor operatively connected to the display, the communication module, and the memory. The instructions according to an embodiment may be configured to, when executed by the processor, cause the electronic device to display, on the display, multiple windows displaying application execution screen. The instructions according to an embodiment may be configured to, when executed by the processor, cause the electronic device to identify notification occurrence in a state in which the multiple windows are being displayed. The instructions according to an embodiment may be configured to, when executed by the processor, cause the electronic device to identify at least one designated state, associated with the selection of a window to display notification information among the multiple windows, based on the identification of the occurrence of the notification. The instructions according to an embodiment may be configured to, when executed by the processor, cause the electronic device to display the notification information in at least a portion of the window selected from among the multiple windows based on the at least one designated state.

According to an embodiment, the notification may include a call reception notification, a message reception notification, an email reception notification, a schedule notification, or a game-related notification.

According to an embodiment, the at least one designated state may include at least one of a video or game playing state, a soft input channel (SIP) window activation state, a state in which a trajectory of the user's hand on the display is identifiable, a state in which a window unused for a designated time period or more exists, or a state in which a non-displayable area exists in a window other than a focus window.

The instructions according to an embodiment may be configured to, when executed by the processor, cause the electronic device to, in case that the at least one designated state is the video or game playing state, select a window other than a window on which a video application execution screen is displayed or a game application execution screen is displayed among the multiple windows.

The instructions according to an embodiment may be configured to, when executed by the processor, cause the electronic device to, in case that the at least one designated state is the soft input channel (SIP) window activation state, select a window adjacent to a window on which an SIP execution screen is displayed among the multiple windows.

The instructions according to an embodiment may be configured to, when executed by the processor, cause the electronic device to, in case that the at least one designated state is the state in which a trajectory of the user's hand on the display is identifiable, select a window most overlapping an area corresponding to the trajectory of the user's hand among the multiple windows.

The instructions according to an embodiment may be configured to, when executed by the processor, cause the electronic device to, in case that the at least one designated state is the state in which a window unused for a designated time period or more exists, select the window unused for a designated time period or more among the multiple windows.

The instructions according to an embodiment may be configured to, when executed by the processor, cause the electronic device to, in case that there are multiple windows unused for a designated time period or more, select a window that hasn't been used for the longest time among the multiple windows.

The instructions according to an embodiment may be configured to, when executed by the processor, cause the electronic device to, in case that the at least one designated state is the state in which a non-displayable area exists in a window other than a focus window, select a window other than the focus window among the multiple windows, and display the notification information in at least a partial area at a position other than the non-displayable area within the selected window.

The instructions according to an embodiment may be configured to, when executed by the processor, cause the electronic device to display a pop-up window including the notification information in at least a partial area of the selected window, the pop-up window having a horizontal width smaller than that of the selected window.

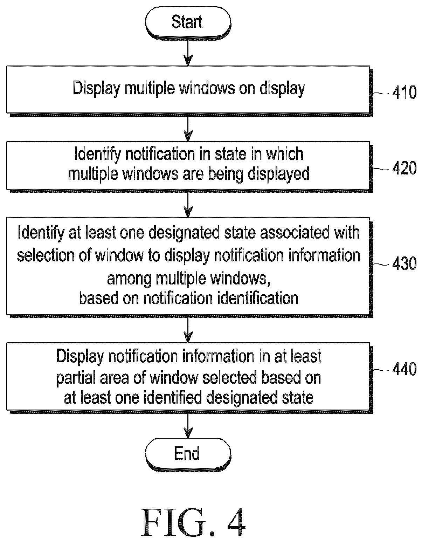

FIG. 4 is a flowchart illustrating a multiple window-based notification information display method in an electronic device according to an embodiment.

Referring to FIG. 4, the processor 320 (e.g., the processor 120 in FIG. 1) of the electronic device 301 (e.g., the electronic device 101 in FIG. 1) according to an embodiment may perform at least one of operation 410 to operation 440.

In operation 410, the processor 320 according to an embodiment may display, on the display 360, multiple windows each configured to display an application execution screen. For example, the processor 320 may display, on the display 360, two windows including a first window corresponding to a first application execution screen and a second window corresponding to a second application execution screen. Alternatively, the processor 320 may display, on the display 360, a first window corresponding to a first application execution screen, a second window corresponding to a second application execution screen, and a third window corresponding to a third application execution screen. For example, the processor 320 may display, on the display 360, four or more windows and the number of windows that may be displayed may not be limited. According to an embodiment, the processor 320 may control a layout including the size and arrangement position of each window when displaying multiple windows. For example, the processor 320 may change the layout including the size and arrangement position of each window according to the number of multiple windows or by selection (or designation or input) of the user.

In operation 420, the processor 320 according to an embodiment may identify the occurrence of a notification in a state in which the multiple windows are displayed in the electronic device. For example, the notification may occur through respective applications of the electronic device. For example, notifications may include a call reception notification generated through a phone application, a message reception notification generated through a message application, an email reception notification generated through an email application, a schedule notification generated through a calendar application, or a game-related notification generated through a game application and may further include other notifications from other applications.

In operation 430, the processor 320 according to an embodiment may identify at least one designated state, associated with the selection of a window to display notification information among the multiple windows, based on the identification of the occurrence of the notification while multiple windows are being displayed. For example, the at least one designated state may include at least one of a video or game playing state, an SIP window activation state, a state in which a trajectory of the user's hand on the display is identifiable, a state in which a window unused for a designated time period or more exists, and/or a state in which a non-displayable area exists in a window other than a focus window. For example, the video or game playing state may include a state in which a video application execution screen is displayed on at least one window among the multiple windows or a game application execution screen is displayed on at least one window among the multiple windows. The SIP window activation state may include a state in which an SIP execution screen (e.g., a soft keyboard) is displayed on at least one window among the multiple windows. The state in which a trajectory of the user's hand on the display 360 is identifiable may correspond to a state in which a trajectory of the user's hand coming in contact with a display screen or performing hovering is identifiable. The state in which a window unused for a designated time period or more exists may correspond to a state in which at least one window among the multiple windows is not used for a designated time period or more. The state in which a non-displayable area exists in a window other than a focus window may include a state in which button (or icon) information is displayed on a window other than the focus window among the multiple windows or a camera punch hole exists.

In operation 440, the processor 320 according to an embodiment may display notification information in at least a partial area of the selected window based on the at least one identified designated state, According to an embodiment, the processor 320 may, in case that the at least one designated state associated with the selection of the window to display the notification information among the multiple window is the video or game playing state, select(or identify) a window other than a window on which a video application execution screen is displayed or a game application execution screen is displayed, and display the notification information in an area of the selected window. According to an embodiment, the processor 320 may, in case that the at least one designated state is the SIP window activation state, select (or identify) a window adjacent to a window on which an SIP execution screen is displayed and display the notification information on the selected window area. According to an embodiment, the processor 320 may, in case that the at least one designated state is the state in which a trajectory of the user's hand on the display is identifiable, select a window that overlaps the most with an area corresponding to the trajectory of the user's hand and display the notification information in at least a partial area of the selected window. According to an embodiment, the processor 320 may, in case that the at least one designated state is the state in which a window unused for a designated time period or more exists, select the window not used for a designated time period or more and display the notification information in at least a partial area of the selected window. For example, in case that there are multiple windows unused for a designated time period or more, a window that has not been used for the longest time may be selected. According to an embodiment, the processor 320 may, in case the at least one designated state is the state in which a non-displayable area exists in a window other than a focus window, display the notification information at a position other than the non-displayable area within the window other than the focus window. According to an embodiment, the processor 320 may, in case that the at least one designated state is the state in which a non-displayable area exists in a window other than a focus window, display the notification information at an upper area of the window other than the focus window. The processor 320 according to an embodiment may display the notification information as a pop-up window on at least a portion of the selected window area. According to an embodiment, the processor 320 may cause the pop-up window corresponding to the notification information to have a horizontal width not exceeding that of the selected window area and display up to five lines when a content length (e.g., a sentence length) included in the notification information is long, with the remaining portion being represented by an ellipsis such as "...".

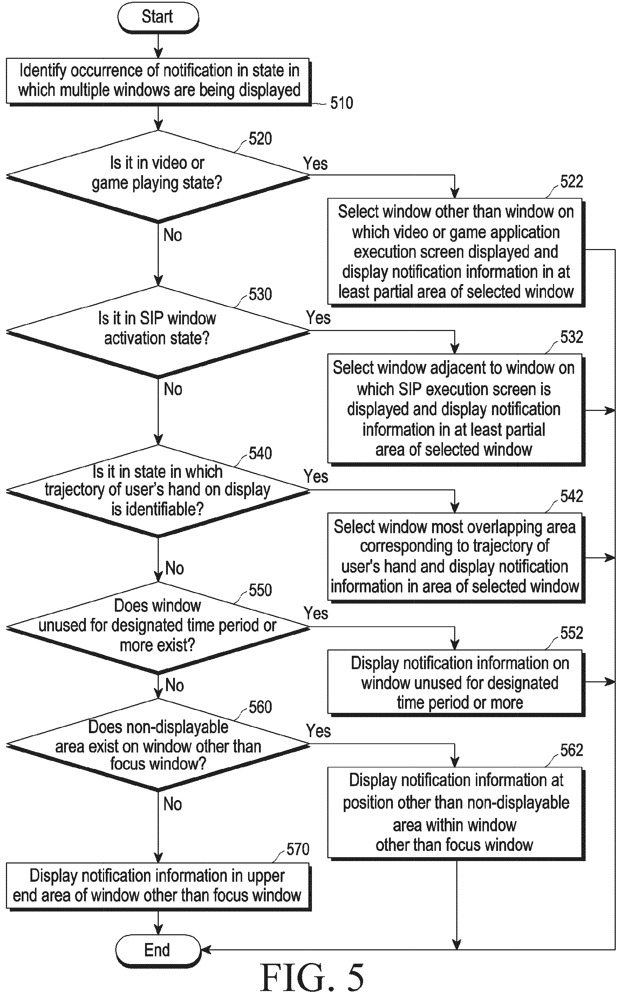

FIG. 5 is a flowchart illustrating a notification information display method based on multiple states associated with multiple windows in an electronic device according to an embodiment.

Referring to FIG. 5, the processor 320 (e.g., the processor 120 in FIG. 1) of the electronic device 301 (e.g., the electronic device 101 in FIG. 1) according to an embodiment may perform at least one of operation 510 to operation 570.

In operation 510, the processor 320 according to an embodiment may identify occurrence of a notification in a state in which the multiple windows are displayed. For example, the notification may occur through respective applications of the electronic device. For example, notifications may include a call reception notification generated through a phone application, a message reception notification generated through a message application, an email reception notification generated through an email application, a schedule notification generated through a calendar application, or a game-related notification generated through a game application and may further include other notifications from other applications.

In operation 520, the processor 320 according to an embodiment may identify whether it is the video or game playing state, based on the identification of the occurrence of the notification while multiple windows are being displayed. For example, the video or game playing state may include a state in which a video application execution screen is displayed on at least one window among the multiple windows or a game application execution screen is displayed on at least one window among the multiple windows.

In operation 522, according to an embodiment, the processor 320 may, in case that it is in the video or game playing state (operation 520-Yes), select(or identify) a window other than a window on which a video application execution screen is displayed or a game application execution screen is displayed, and display the notification information in an area of the selected window.

In operation 530, according to an embodiment, the processor 320 may, in case that it is not in the video or game playing state (operation 520-No), identify whether it is in the SIP window activation state. For example, the SIP window activation state may correspond to a state in which an SIP execution screen (e.g., a soft keyboard) is displayed on at least one window among the multiple windows.

In operation 532, according to an embodiment, the processor 320 may, in case that it is in the SIP window activation state (operation 530-Yes), select (or identify) a window adjacent to a window on which an SIP execution screen is displayed and display the notification information on the selected window area.

In operation 540, according to an embodiment, the processor 320 may, in case that it is not in the SIP window activation state (operation 530-No), identify whether it is in the state in which a trajectory of the user's hand on the display is identifiable.

In operation 542, according to an embodiment, the processor 320 may, in case that it is in the state in which a trajectory of the user's hand on the display is identifiable (operation 540-Yes), select a window that overlaps the most with an area corresponding to the trajectory of the user's hand and display the notification information in at least a partial area of the selected window. For example, the processor 320 may detect an input (e.g., a touch and/or hovering) of the user's hand (or finger) and/or an external electronic device (e.g., the electronic device 102 or 104 in FIG. 1) (e.g., a stylus pen or electronic pen) through the display 360 (e.g., a touch screen), identify an area corresponding to the trajectory of the user's hand by using an input trajectory of the user's hand and/or the external electronic device, select a window most overlapping with an area corresponding to the trajectory of the user's hand, and display the notification information on at least a partial area of the selected window.

In operation 550, according to an embodiment, the processor 320 may, in case that it is not in the state in which a trajectory of the user's hand on the display is identifiable (operation 540-No), identify whether it is in the state in which a window unused for a designated time period or more exists. For example, the processor 320 may identify the state in which at least one window among the multiple windows is not used for a designated time period or more.

In operation 552, according to an embodiment, the processor 320 may, in case that it is in the state in which a window unused for a designated time period or more exists (operation 550-Yes), select the window not used for a designated time period or more and display the notification information in at least a partial area of the selected window. In case that there are multiple windows unused for a designated time period or more, a window that has not been used for the longest time may be selected.

In operation 560, according to an embodiment, the processor 320 may, in case that it is not in the state in which a window unused for a designated time period or more exists (operation 550-No), identify whether it is in the state in which a non-displayable area exists in a window other than a focus window. For example, the state in which a non-displayable area exists in a window other than a focus window may include a state in which button (or icon) information is displayed on a window other than the focus window among the multiple windows or a camera punch hole exists.

In operation 562, according to an embodiment, the processor 320 may, in case that it is in the state in which a non-displayable area exists in a window other than a focus window (operation 560-Yes), select a window other than the focus window, and display the notification information in an area at a position other than the non-displayable area within the selected window.

In operation 570, according to an embodiment, the processor 320 may, in case that it is not in the state in which a non-displayable area exists in a window other than a focus window (operation 560-No), display the notification information at an upper end area (or designated area) of the window other than the focus window.

A multiple window-based notification information display method in an electronic device (e.g., the electronic device 101 in FIG. 1 or the electronic device 301 in FIG. 3) according to an embodiment may include an operation of displaying multiple windows configured to display an application execution screen on a display of the electronic device. The method according to an embodiment may include an operation of identifying notification occurrence in a state in which the multiple windows are being displayed. The method according to an embodiment may include an operation of identifying at least one designated state, associated with the selection of a window to display notification information among the multiple windows, based on the identification of the occurrence of the notification. The method according to an embodiment may include an operation of displaying the notification information in at least a portion of the window selected from among the multiple windows, based on at least one designated state.

In the method according to an embodiment, the notification may include a call reception notification, a message reception notification, an email reception notification, a schedule notification, or a game-related notification.

In the method according to an embodiment, the at least one designated state may include at least one of a video or game playing state, a soft input channel (SIP) window activation state, a state in which a trajectory of the user's hand on the display is identifiable, a state in which a window unused for a designated time period or more exists, and/or a state in which a non-displayable area exists in a window other than a focus window.

The method according to an embodiment may include an operation of, in case that the at least one designated state is the video or game playing state, selecting a window other than a window on which a video application execution screen is displayed or a game application execution screen is displayed among the multiple windows.

The method according to an embodiment may include an operation of, in case that the at least one designated state is the soft input channel (SIP) window activation state, selecting a window adjacent to a window on which an SIP execution screen is displayed among the multiple windows.

The method according to an embodiment may include an operation of, in case that the at least one designated state is the state in which a trajectory of the user's hand on the display is identifiable, selecting a window most overlapping an area corresponding to the trajectory of the user's hand among the multiple windows.

The method according to an embodiment may include an operation of, in case that the at least one designated state is the state in which a window unused for a designated time period or more exists, selecting the window unused for a designated time period or more among the multiple windows, wherein in case that there are multiple windows unused for a designated time period or more, a window that hasn't been used for the longest time may be selected from among the multiple windows.

The method according to an embodiment may include an operation of, in case that the at least one designated state is the state in which a non-displayable area exists in a window other than a focus window, selecting a window other than the focus window among the multiple windows, and displaying the notification information in at least a partial area at a position other than the non-displayable area within the selected window.

The method according to an embodiment may include an operation of displaying a pop-up window including the notification information in at least a partial area of the selected window, the pop-up window having a horizontal width smaller than that of the selected window.

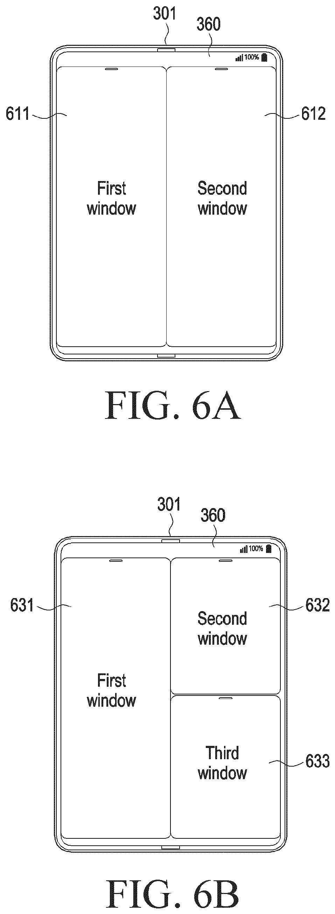

FIG. 6A is a view illustrating multiple windows including a first window and a second window according to an embodiment.

Referring to FIG. 6A, the processor 320 (e.g., the processor 120 in FIG. 1) of the electronic device 301 (e.g., the electronic device 101 in FIG. 1) according to an embodiment may display a first window 611 configured to display a first application execution screen and a second window 612 configured to display a second application execution screen on the display 360. For example, the first window 611 may be displayed to occupy a portion of the entire screen of the display 360 and the second window 612 may be displayed to occupy another portion of the entire screen of the display 360. For example, the size of the first window 611 may be identical to or different from the size of the second window 612.

FIG. 6B is a view illustrating multiple windows including a first window to a third window according to an embodiment.

Referring to FIG. 6B, the processor 320 (e.g., the processor 120 in FIG. 1) of the electronic device 301 (e.g., the electronic device 101 in FIG. 1) according to an embodiment may display a first window 631 configured to display a first application execution screen, a second window 632 configured to display a second application execution screen, and a third window 633 configured to display a third application execution screen on the display 360. For example, the first window 631 may be displayed to occupy a portion of the entire screen of the display 360, the second window 632 may be displayed to occupy another portion of the entire screen of the display 360, and the third window 633 may be displayed to occupy still another portion of the entire screen of the display 360. For example, the size of the first window 631 to the third window 633 may be identical to or different from each other. Although, two or three windows are exemplified in FIGS. 6A and 6B, four or more windows may be displayed and multiple windows may be displayed to overlap each other or to be spaced apart from each other.

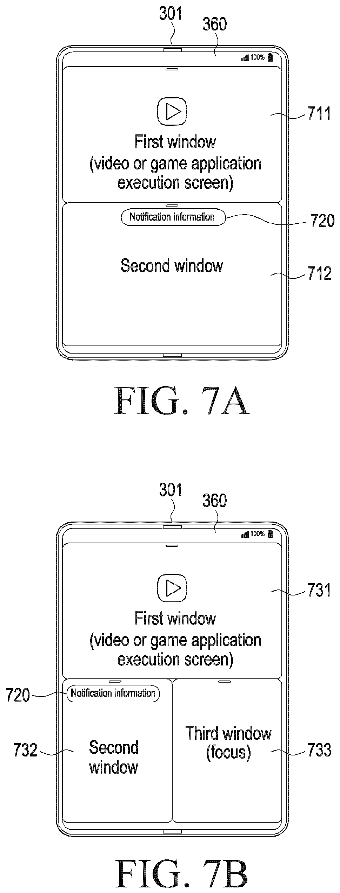

FIG. 7A is a view illustrating the case of a video or game playing state when a notification occurs while displaying a first window to a third window according to an embodiment, and FIG. 7B is a view illustrating the case of a video or game playing state when a notification occurs while displaying a first window to a third window according to an embodiment.

Referring to FIG. 7A first, the processor 320 (e.g., the processor 120 in FIG. 1) of the electronic device 301 (e.g., the electronic device 101 in FIG. 1) according to an embodiment may, in case that a video application execution screen is being displayed or a game application execution screen is being displayed on the first window 711 when a notification occurs while displaying the first window 711 and the second window 712, display notification information 720 in at least a partial area (e.g., the upper center area of the second window 712) of the second window 712.

Referring to FIG. 7B, the processor 320 (e.g., the processor 120 in FIG. 1) of the electronic device 301 (e.g., the electronic device 101 in FIG. 1) according to an embodiment may, in case that a video application execution screen is being displayed or a game application execution screen is being displayed on the first window 731 when a notification occurs while displaying the first window to the third window 731 to 733, display notification information 720 in at least a partial area (e.g., the upper center area) of a window (e.g., the second window) not in a focus state among the second window 732 and the third window 733.

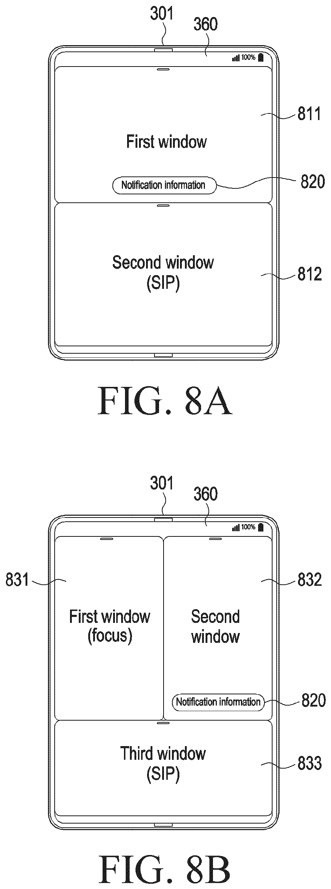

FIG. 8A is a view illustrating the case of an SIP window activation state when a notification occurs while displaying a first window and a second window according to an embodiment, and FIG. 8B is a view illustrating the case of an SIP window activation state when a notification occurs while displaying a first window to a third window according to an embodiment.

Referring to FIG. 8A first, the processor 320 (e.g., the processor 120 in FIG. 1) of the electronic device 301 (e.g., the electronic device 101 in FIG. 1) according to an embodiment may, in case that an SIP execution screen is being displayed on the second window 812 when a notification occurs while displaying the first window 811 and the second window 812, display notification information in at least a partial area of the first window 812 adjacent to the second window 812 and display the notification information 820 in an area at a position adjacent to the second window 812 among the first window 811.

Referring to FIG. 8B, the processor 320 (e.g., the processor 120 in FIG. 1) of the electronic device 301 (e.g., the electronic device 101 in FIG. 1) according to an embodiment may, in case that an SIP execution screen is being displayed on the third window 833 when a notification occurs while displaying the first window to the third window 831 to 833, display notification information in at least a partial area of the second window 832 not in the focus state among the first window 831 and the second window 832 and display the notification information 820 in an area at a position adjacent to the third window 833 among the second window 832.

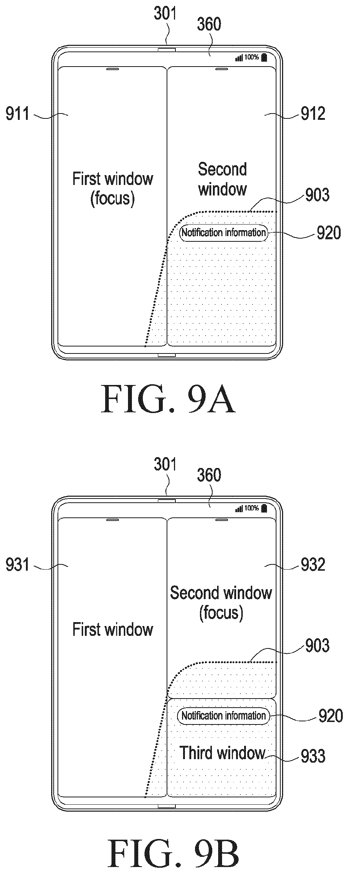

FIG. 9A is a view illustrating the case of a state in which a trajectory of a user's hand on a display is identifiable, when a notification occurs while displaying a first window and a second window according to an embodiment, and FIG. 9B is a view illustrating the case of a state in which a trajectory of a user's hand on a display is identifiable, when a notification occurs while displaying a first window to a third window according to an embodiment.

Referring to FIG. 9A first, the processor 320 (e.g., the processor 120 in FIG. 1) of the electronic device 301 (e.g., the electronic device 101 in FIG. 1) according to an embodiment may, in case that it is in the state in which a trajectory of the user's hand on the display is identifiable when a notification occurs while displaying the first window 911 and the second window 912, select a window (e.g., the second window 912) the most overlapping an area 903 corresponding to the trajectory of the user's hand and display the notification information 920 in at least a partial area of the selected second window 912.

Referring to FIG. 9B, the processor 320 (e.g., the processor 120 in FIG. 1) of the electronic device 301 (e.g., the electronic device 101 in FIG. 1) according to an embodiment may, in case that it is in the state in which a trajectory of the user's hand on the display is identifiable when a notification occurs while displaying the first window to the third window 931 to 933, select a window (e.g., the third window 933) the most overlapping an area 903 corresponding to the trajectory of the user's hand and display the notification information 920 in at least a partial area of the selected third window 933. For example, the processor 320 may, in case that the second window 932 is the focus window, display the notification information 920 in an area at a position of the third window 933, which is adjacent to the second window 932 corresponding to the focus window.

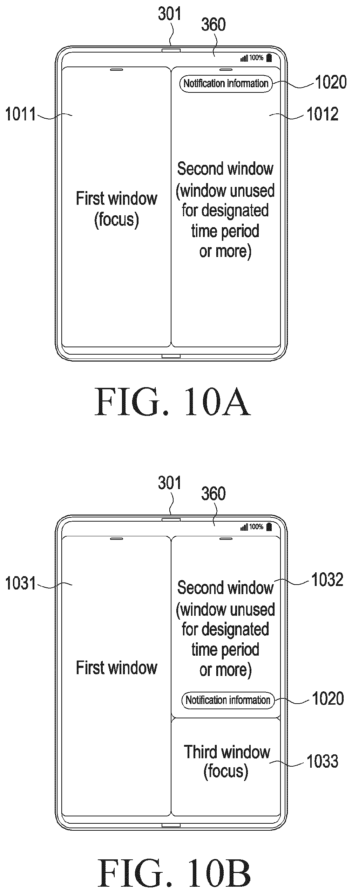

FIG. 10A is a view illustrating the case of a state in which an unused window exists for a designated time period or more, when a notification occurs while displaying a first window and a second window according to an embodiment, and FIG. 10B is a view illustrating the case of a state in which an unused window exists for a designated time period or more, when a notification occurs while displaying a first window to a third window according to an embodiment.

Referring to FIG. 10A first, the processor 320 (e.g., the processor 120 in FIG. 1) of the electronic device 301 (e.g., the electronic device 101 in FIG. 1) according to an embodiment may, in case that the second window 1012 corresponds to a window unused for a designated time period or more or a window having not been used for the longest time when a notification occurs while displaying the first window 1011 and the second window 1012, display notification information 1020 in at least a partial area of the second window 1012.

Referring to FIG. 10B, the processor 320 (e.g., the processor 120 in FIG. 1) of the electronic device 301 (e.g., the electronic device 101 in FIG. 1) according to an embodiment may, in case that the second window 1012 corresponds to a window unused for a designated time period or more or a window having not been used for the longest time when a notification occurs while displaying the first window to the third window 1031 to 1033, display notification information in at least a partial area of the second window 1032 and in case that the third window 1033 corresponds to the focus window, display the notification information 1020 in an area at a position most adjacent to the third window 1033. For example, in case that there are multiple windows (e.g., the second window 1032 and the third window 1033) unused for a designated time period or more, the processor 320 may display the notification information 1020 in a window (e.g., the second window 1032) having not been used for the longest time.

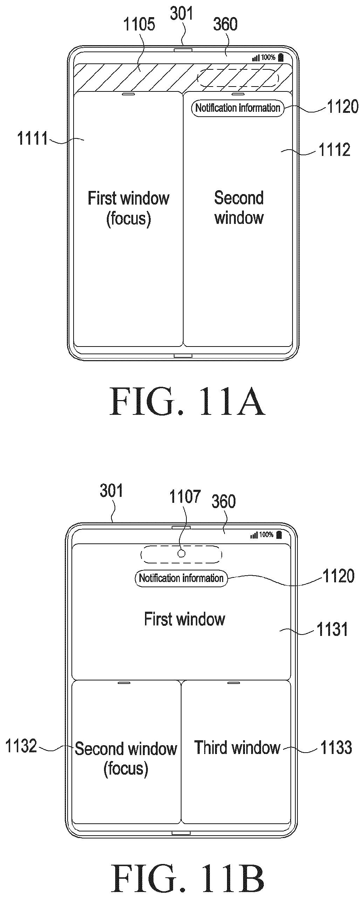

FIG. 11A is a view illustrating the case of a state in which button (or icon) information is displayed on a window other than a focus window, when a notification occurs while displaying a first window and a second window according to an embodiment, and FIG. 11B is a view illustrating the case of a state in which a camera punch hole area exist on a window other than a focus window, when a notification occurs while displaying a first window to a third window according to an embodiment.

Referring to FIG. 11A first, the processor 320 (e.g., the processor 120 in FIG. 1) of the electronic device 301 (e.g., the electronic device 101 in FIG. 1) according to an embodiment may, in the case of a state in which the first window 1111 corresponds to the focus window and a button (or icon) information is being displayed on the second window 1112 not corresponding to the focus window, when a notification occurs while displaying the first window 1111 and the second window 1112, display notification information 1120 in an area at a position other than a button information display area 1105. According to an embodiment, the processor 320 may, in case that the first window 1111 corresponds to the focus window and the button (or icon) information is not being displayed on the second window 1112 not corresponding to the focus window (not shown), display the notification information 1120 at the upper end of the second window 1112.

Referring to FIG. 11B, the processor 320 (e.g., the processor 120 in FIG. 1) of the electronic device 301 (e.g., the electronic device 101 in FIG. 1) according to an embodiment may, in case that a camera punch hole 1107 exists on the first window 1131 (or the third window 1133) not corresponding to the focus window, when a notification occurs while displaying the first window 1131 to the third window 1133, display the notification information 1120 in an area at a position other than the camera punch hole 1107. According to an embodiment, the processor 320 may, in case that the camera punch hole 1107 does not exist on the first window 1131 (or the third window 1133) not corresponding to the focus window (not shown), display the notification information 1120 at the upper end of the first window 1131.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A non-transitory computer-readable recording medium according to an embodiment may store instructions configured to, when executed, configured to cause at least one processor of an electronic device to display, on a display of the electronic device, multiple windows displaying application execution screen, identify notification occurrence in a state in which the multiple windows are being displayed, identify at least one designated state, associated with the selection of a window to display notification information among the multiple windows, based on the identification of the occurrence of the notification, and display the notification information in at least a portion of the window selected from among the multiple windows, based on the at least one designated state.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101, 301) comprising:
a display (160, 360);
a communication module (190, 390);
memory (130, 330) storing instructions; and
a processor (120, 320) operatively connected to the display, the communication module, and the memory,
wherein the instructions are configured to, when executed by the processor, cause the electronic device to:
display, on the display, multiple windows displaying application execution screen;
identify occurrence of a notification in a state in which the multiple windows are being displayed;
identify at least one designated state associated with selection of a window to display notification information among the multiple windows, based on the identification of the occurrence of the notification; and
display the notification information in at least a partial area of the window selected from among the multiple windows, based on the at least one identified designated state.

2. The electronic device of claim 1, wherein the notification comprises a call reception notification, a message reception notification, an email reception notification, a schedule notification, or a game-related notification.

3. The electronic device of claim 1 or 2, wherein the at least one designated state comprises at least one of a video or game playing state, a soft input channel (SIP) window activation state, a state in which a trajectory of a user's hand on the display is identifiable, a state in which a window unused for a designated time period or more exists, or a state in which a non-displayable area exists in a window other than a focus window.

4. The electronic device of one of claims 1 to 3, wherein the instructions are configured to, when executed by the processor, cause the electronic device to, in case that the at least one designated state corresponds to the video or game playing state, select a window other than a window on which a video application execution screen is displayed or a game application execution screen is displayed, among the multiple windows.

5. The electronic device of one of claims 1 to 4, wherein the instructions are configured to, when executed by the processor, cause the electronic device to, in case that the at least one designated state corresponds to the soft input channel (SIP) window activation state, select a window adjacent to a window on which an SIP execution screen is displayed, among the multiple windows.

6. The electronic device of one of claims 1 to 5, wherein the instructions are configured to, when executed by the processor, cause the electronic device to, in case that the at least one designated state corresponds to the state in which a trajectory of the user's hand on the display is identifiable, select a window most overlapping an area corresponding to the trajectory of the user's hand, among the multiple windows.

7. The electronic device of one of claims 1 to 6, wherein the instructions are configured to, when executed by the processor, cause the electronic device to, in case that the at least one designated state corresponds to the state in which a window unused for a designated time period or more exists, select the window unused for a designated time period or more, among the multiple windows.

8. The electronic device of one of claims 1 to 7, wherein the instructions are configured to, when executed by the processor, cause the electronic device to, in case that there are multiple windows unused for a designated time period or more, select a window that hasn't been used for a longest time, among the multiple windows.

9. The electronic device of one of claims 1 to 8, wherein the instructions are configured to, when executed by the processor, cause the electronic device to, in case that the at least one designated state corresponds to the state in which a non-displayable area exists in a window other than the focus window, select a window other than the focus window, among the multiple windows, and display the notification information in at least a partial area at a position other than the non-displayable area within the selected window.

10. The electronic device of one of claims 1 to 9, wherein the instructions are configured to, when executed by the processor, cause the electronic device to display a pop-up window comprising the notification information in at least a partial area of the selected window, the pop-up window having a horizontal width smaller than that of the selected window.

11. A method for displaying multiple window-based notification information in an electronic device, the method comprising:
displaying, on a display of the electronic device, multiple windows displaying application execution screen;
identifying occurrence of a notification in a state in which the multiple windows are being displayed;
identifying at least one designated state, associated with selection of a window to display notification information among the multiple windows, based on the identification of the occurrence of the notification; and
displaying the notification information in at least a partial area of the window selected from among the multiple windows, based on the at least one identified designated state.

12. The method of claim 11, wherein the notification comprises a call reception notification, a message reception notification, an email reception notification, a schedule notification, or a game-related notification, and
wherein the at least one designated state comprises at least one of a video or game playing state, a soft input channel (SIP) window activation state, a state in which a trajectory of a user's hand on the display is identifiable, a state in which a window unused for a designated time period or more exists, or a state in which a non-displayable area exists in a window other than a focus window.

13. The method of claim 11 or 12, comprising:
in case that the at least one designated state corresponds to the video or game playing state, selecting a window other than a window on which a video application execution screen is displayed or a game application execution screen is displayed, among the multiple windows;
in case that the at least one designated state corresponds to the soft input channel (SIP) window activation state, selecting a window adjacent to a window on which an SIP execution screen is displayed, among the multiple windows;
in case that the at least one designated state corresponds to the state in which a trajectory of the user's hand on the display is identifiable, select a window most overlapping an area corresponding to the trajectory of the user's hand, among the multiple windows;
in case that the at least one designated state corresponds to the state in which a window unused for a designated time period or more exists, selecting the window unused for a designated time period or more among the multiple windows, wherein in case that there are multiple windows unused for a designated time period or more, a window that hasn't been used for a longest time is selected from among the multiple windows; and
in case that the at least one designated state corresponds to the state in which a non-displayable area exists in a window other than the focus window, selecting a window other than the focus window among the multiple windows, and displaying the notification information in at least a partial area at a position other than the non-displayable area within the selected window.

14. The method of one of claims 11 to 13, comprising displaying a pop-up window comprising the notification information in at least a partial area of the selected window, the pop-up window having a horizontal width smaller than that of the selected window.

15. A non-transitory computer-readable recording medium,
wherein the recording medium stores instructions configured to, when executed, cause at least one processor of an electronic device to:
display, on a display of the electronic device, multiple windows displaying application execution screen;
identify occurrence of a notification in a state in which the multiple windows are being displayed;
identify at least one designated state, associated with the selection of a window to display notification information among the multiple windows, based on the identification of the occurrence of the notification; and
display the notification information in at least a portion of the window selected from among the multiple windows, based on the at least one designated state.
